# EUROPÄISCHE PATENTANMELDUNG

(11) **EP 1 319 692 A1**
(43) Veröffentlichungstag der Anmeldung: **18.06.2003**
(21) Anmeldenummer: 01129931.0
(22) Anmeldetag: 17.12.2001
(51) Int. Cl.: C09D 4/00, C08F 230/02, C09J 5/02

(54) **Oberflächenbehandlungsmittel für metallische Untergründe von polymerisierbaren aeroben (Meth)acrylatsystemen**

(71) Anmelder: Sika Schweiz AG, 8064 Zürich (CH)
(72) Erfinder: De Cooman, Ria, Dr., 6331 Hünenberg ZG (CH); Flury, René, 4056 Basel (CH)
(74) Vertreter: Isler, Jörg

(57) **Zusammenfassung**

Die Erfindung beschreibt Oberflächenbehandlungsmittel für aerobe (Meth)acrylatsysteme, umfassend ein oder mehrere Lösungsmitteln sowie ein oder mehrere (Meth)acrylatmonomere der Formel A: 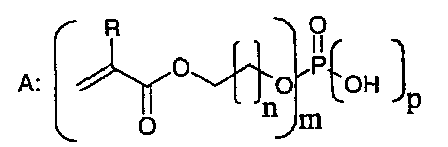 wobei R=H oder CH₃ und m=1-3, p=3-m und n=1-15 mit m, p und n=ganzzahlig ist.
Weiterhin wird ein Oberflächenbehandlungsmittel für aerobe (Meth)acrylatsysteme beschrieben, welches aus einem oder mehreren Lösungsmitteln, sowie einem oder mehreren (Meth)acrylatmonomeren der Formel A, sowie einem oder mehreren weiteren (Meth)acrylatmonomeren, frei von phosphorhaltigen funktionellen Gruppen besteht.
Weiterhin werden Artikel beschrieben, deren Oberfläche zumindestens im Verbundbereich aus Metall bestehen und mit einem beschriebenen Oberflächenbehandlungsmittel vorbehandelt wurden.
Weiterhin werden beansprucht ein Klebstoffsystem, respektive ein Dichtstoffsystem, bei welchem ein Artikel mittels eines aeroben (Meth)acrylatklebstoffes mit mindestens einem weiteren Artikel verklebt respektive bei welchem eine Öffnung in einem Artikel oder zwischen Artikeln mittels eines aeroben (Meth)acrylatdichtstoffes gegen flüssige oder gasförmige Stoffe verschlossen worden ist.

## Beschreibung

### Technisches Gebiet und Stand der Technik

Die Erfindung betrifft Oberflächenbehandlungsmittel für die Erhöhung der Haftung von aeroben (Meth)acrylatsystemen auf metallischen Untergründen. Reaktive Systeme basierend auf (Meth)acrylaten weisen wesentliche Vorteile auf. Insbesondere können äusserst schnell reagierende Systeme formuliert werden und ausserdem weisen sie generell ein sehr gutes Haftspektrum auf. Solche reaktiven Systeme werden sehr vielfältig eingesetzt als Klebstoffe, Dichtstoffe, Lacke und andere Beschichtungsmittel. Es zeigt sich jedoch, dass die Haftung auf metallischen Untergründen vielfach unzureichend ist, vor allem bei erhöhten Temperaturen.

Auf Glas und Metallen werden zur Erhöhung der Haftung von Epoxid- und Polyurethan-Klebstoffen und Beschichtungen vielfach Silane eingesetzt. Als Beispiel hierfür seien die Werke von Plueddemann erwähnt (Plueddemann E.P.in 'Silane Coupling Agents',Plenum Press,New York 1991 und Plueddemann E.P.in 'Silanes and other Coupling Agents',ed. Mital K.L.,VSP,Utrecht 1992).

Clark (1988 Fall Technical Mini-Seminar, November 2, Hyatt Regency Dearborn, Dearborn, Michigan / ASC, The Adhesive and Sealant Council, Inc, Washington, DC, S.27-37.) beschreibt in Bruchflächenuntersuchungen die vorteilhafte Verwendung von Methacryloxyethylphosphat und Bis(methacryloxyethylphosphat) als Primer für Zink, Aluminium und Stahl für anaerobe Methacrylatklebstoffe.

Ebenfalls einen Primer für anaerobe Klebstoffe beschreibt US 4,731,146, in dem Cu(II), Co(II), Mn(II), Mn(III) oder Cr(III) Salze eines sauren Phosphatmonomers in einem flüchtigen Lösungsmittel enthalten sind.

Die beschriebenen anaeroben (Meth)acrylatsysteme weisen den grossen Nachteil auf, dass sie nur für sehr kleine Schichtdicken, typischerweise Filme, geeignet sind. Als dickere Schicht aufgetragen weisen solche Klebstoffe dagegen schlechte mechanische Eigenschaften und als Folge davon sehr dürftige Haftung und auf.

Zur Verbesserung der Haftung von (Meth)acrylatklebstoffen auf Edelmetallen beschreibt US 6,265,508 eine Oberflächenbehandlungslösung, welche neben einem polymerisierbaren Phosphorsäureester-Monomer auch ein polymerisierbares Thiophencarbonsäureester-Monomer enthält.

Es sind (Meth)acrylatsysteme bekannt, welche als anaerob bezeichnet werden. Hierbei handelt es sich um 1-komponentige System, welche nur unter Ausschluss von Sauerstoff und in Kontakt mit Metalloberflächen polymerisieren. Ein beispielhafter Einsatz hierfür sind Schraubensicherungen.

Als aerobe (Meth)acrylatsysteme werden 2-komponentige Systeme definiert, bei denen neben den mindestens in einer Komponente vorliegenden (Meth)acrylatmonomeren, beziehungsweise Mischungen derselben, in der einen Komponente mindestens ein Radikalstarter, typischerweise ein Peroxid, und in der anderen Komponente mindestens ein Beschleuniger enthalten ist. Im Gegensatz zu anaeroben Systemen können hierbei dickschichtige Verklebungen, Beschichtungen und Dichtungen ermöglicht werden.

Eine generell bekannte Unzulänglichkeit von Oberflächenbehandlungsmitteln, welche vielfach als Primer bezeichnet werden, ist die beschränkte Offenzeit, d.h. diejenige Zeit, die zwischen der Applikation des Oberflächenbehandlungsmittels und dem nachfolgenden Auftrag des Klebstoffs, Dichtstoffs oder der Beschichtung verstreicht. Dieser Nachteil ist besonders störend bei kontinuierlich ablaufenden industriellen Prozessen, welche zuweilen infolge Produktionsunterbrüchen unterschiedlicher Ursache gestoppt werden müssen. Eine Überschreitung der Offenzeit führt in solchen Fällen zu einem Haftversagen der verbundenen Stoffe.

Die Haftung von (Meth)acrylatsystemen auf Metallen ist, besonders bei höheren Einsatztemperaturen des Haftverbundes, vielfach äusserst schlecht. Erfahrungsgemäss wird auf Metallen neben einer Verschlechterung der mechanischen Eigenschaften des (Meth)acrylatsystems ein adhäsiver Haftungsbruch auf der Metallseite festgestellt. Ein adhäsiver Bruch erfolgt, wenn die Adhäsionskräfte kleiner als die Kohäsionskrätfte im Klebstoff sind, und geben dem Fachmann einen Hinweis, dass bei einem solchen Verbund langfristig mit einem Versagen zu rechnen ist. Eine gute Haftung bei erhöhten Temperaturen (bis ca. 120°C) ist jedoch bei industriellen Anwendungen von grosser Bedeutung, da ein Kleb- oder Dichtverbund vielfach höheren Gebrauchstemperaturen unterworfen ist.

### Aufgabe und Lösung

Es ist daher die Aufgabe dieser Erfindung, die beschriebenen Nachteile und Probleme der Oberflächenbehandlungsmittel für Metalle zu überwinden. Unerwartet wurde gefunden, dass die Nachteile des Standes der Technik durch erfindungsgemässe Oberflächenbehandlungsmittel gemäss Anspruch 1 oder 2 behoben werden konnten. Insbesondere kann durch das erfindungsgemässe Oberflächenbehandlungsmittel für Metalle eine exzellente Haftung von aeroben (Meth)acrylatsystemen auf diversen Metalluntergründen erzielt werden, wobei die Haftung auch bei höheren Temperaturen gewährleistet bleibt, so dass der Verbund eines (Meth)acrylatsystems und eines Metalles vorwiegend kohäsiv innerhalb des (Meth)acrylatsystems bricht. Des weiteren können die erfindungsgemässen Oberflächenbehandlungsmittel auch nach sehr langen Offenzeiten ohne Haftungsverminderung verwendet werden.

### Zusammenfassung der Erfindung

Die vorliegende Erfindung betrifft Oberflächenbehandlungsmittel für aerobe (Meth)acrylatsysteme, welche ein oder mehrere Lösungsmittel sowie ein oder mehrere (Meth)acrylatmonomere der Formel A umfassen oder aus einem, beziehungsweise mehreren Lösungsmitteln, einem, beziehungsweise mehreren (Meth)acrylatmonomeren der Formel A, sowie einem oder mehreren weiteren (Meth)acrylatmonomeren, frei von phosphorhaltigen funktionellen Gruppen bestehen. Bevorzugt werden Lösungsmittel ausgewählt aus der Gruppe der chlorierten Kohlenwasserstoffe, Ester, Alkohole und Ketone mit Siedepunkten <130°C. Insbesondere geeignet sind Aceton und Isopropanol. Als besonders geeignete Varianten der (Meth)acrylatmonomeren gemäss Formel A haben sich 2-Methacryloyloxyethylphosphat, Bis(2-Methacryloyloxyethyl)phosphat sowie Tris (2-Methacryloyloxyethyl)phosphat beziehungsweise Mischungen derselben erwiesen.

### Ausführliche Beschreibung der Erfindung

Die vorliegende Erfindung betrifft Oberflächenbehandlungsmittel für aerobe (Meth)acrylatsysteme, welche ein oder mehrere Lösungsmittel sowie ein oder mehrere (Meth)acrylatmonomere der Formel A umfassen oder aus einem, beziehungsweise mehreren Lösungsmitteln, einem, beziehungsweise mehreren (Meth)acrylatmonomeren der Formel A sowie einem oder mehreren weiteren (Meth)acrylatmonomeren, frei von phosphorhaltigen funktionellen Gruppen bestehen. 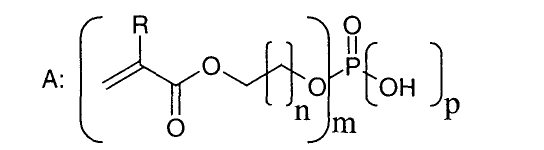 Mit R=H oder CH₃, m=1-3, p=3-m und n=1-15.

Das verwendete Lösungsmittel weist bei Normalbedingungen einen Siedepunkt < 130°C auf. Vorzugsweise wird ein Lösungsmittel mit Siedepunkt <100°C, besonders bevorzugt <90°C, verwendet. Als Lösungsmittel geeignet sind beispielsweise chlorierte Kohlenwasserstoffe, wie Methylenchlorid, 1,2 Dichlorethan, 1,2-Dichlorethan, 1,1,1-Trichlorethan oder Trichlorethylen, Ester, wie Butylacetat, Propylacetat, Ethylacetat, Ethylformiat oder Butylformiat, Alkohole, wie Methanol, Ethanol, n-Propanol, Isopropanol oder Butanol aber auch Alkoxyalkohole wie Alkoxypropanol, Ethylenglykolmonomethylether, Ethylenglykoldiethylether oder Propylenglykolmonomethylether und Ketone wie Diethylketon, Methylethylketon oder Methylpropylketon. Als besonders geeignet haben sich Isopropanol und Aceton gezeigt.

Das erfindungsgemässe Oberflächenbehandlungsmittel enthält (Meth)acrylatmonomeren der Formel A

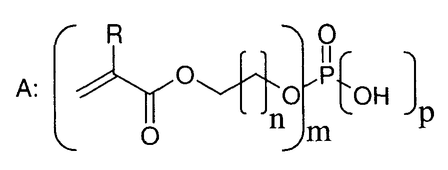

Der Rest R stellt hierbei ein H oder eine Methylgruppe dar, wobei die Methylgruppe bevorzugt wird. Die Monomeren umfassen Moleküle mit n von 1 bis 15, bevorzugt werden solche mit n von 1 bis 3. Beispiele hierfür sind 2-(Meth)acryloyloxyethylphosphat, 4-(Meth)acryloyloxybutylphosphat, 6-(Meth)acryloyloxyhexylphosphat, 8-(Meth)acryloyloxyoctylphosphat, 10-(Meth)acryloyloxydecylphosphat, 16-(Meth)acryloylhexadecylphosphat. Bevorzugt sind Moleküle mit n=1.

Entsprechend den Indizes m=1-3 und p=0-2, sind alle möglichen Kombinationen denkbar, wobei mindestens ein (Meth)acrylatrest vorhanden sein muss. Bevorzugte Monomere sind 2-Methacryloyloxyethylphosphat, Bis(2-Methacryloyloxyethyl)phosphat sowie Tris (2-Methacryloyloxyethyl)phosphat. Aufgrund der Herstellung dieser Monomeren können selbstverständlich auch noch Spuren von Phosphorsäure als Verunreingung vorhanden sein.

In bestimmten Fällen können auch noch andere (Meth)acrylatmonomere vorhanden sein, welche frei von phosphorhaltigen funktionellen Gruppen sind. Insbesondere handelt es sich hierbei um Monomere ausgewählt aus der Gruppe von Trimethylolpropantriacrylat, ethoxylierten und propoxylierten (Meth)acrylaten. Die ethoxylierten und propoxylierten (Meth)acrylate können eine oder mehrere (Meth)acrylat-Gruppen enthalten, wobei eine bis drei bevorzugt sind. Besonders bevorzugt sind ethoxyliertes Trimethylolpropantriacrylat, propoxyliertes Neopentylglycoldi(meth)acrylat sowie ethoxyliertes Ethyl(meth)acrylat, beispielsweise 2-(2-Ethoxyethoxy)ethylacrylat. (Meth)acrylatmonomeren der Formel A werden kommerziell häufig als Mischung mit solchen (Meth)acrylatmonomeren angeboten.

Diese (Meth)acrylatmonomeren, welche frei von phosphorhaltigen funktionellen Gruppen sind, können in einer Konzentration von 0-20 Gewichts-%, insbesondere 0-10 Gewichts-%, bezogen auf die gesamte Formulierung, vorkommen.

Eine bevorzugte Ausführungsform des Oberflächenbehandlungsmittels enthält (Meth)acrylatmonomere der Formel A in einer Konzentration von 1-10 Gewichts-%, besonders bevorzugt 2-7 Gewichts-%, bezogen auf die gesamte Formulierung.

Weiterhin wird ein Oberflächenbehandlungsmittel für aerobe (Meth)acrylatsysteme beschrieben, welches aus einem oder mehreren Lösungsmitteln, einem oder mehreren (Meth)acrylatmonomeren der Formel A, mindestens Resorcin oder eines der Derivate davon, sowie einem oder mehreren weiteren (Meth)acrylatmonomeren, frei von phosphorhaltigen funktionellen Gruppen besteht. Bevorzugte Derivate von Resorcin sind Monoalkylether, einfach oder mehrfach alkylierte, cycloalkylierte, aryl-, alkenyl- oder halogen substituierte Resorcine. Es sind jedoch auch miteinander verbrückte Substituenten von gesättigtem, ungesättigtem oder aromatischem Charakter denkbar, wie beispielsweise 1,3 -Dihydroxynaphthalin oder 1,3-Dihydroxy-5,6,7,8-Tetrahydronaphthalin. Als besonders geeignet hat sich Resorcin (1,3-Dihydroxybenzol) erwiesen.

Eine bevorzugte Ausführungsform des Oberflächenbehandlungsmittels kann Organosilizium-Verbindungen enthalten. Diese umfassen Verbindungen der Formel B

B: X-Si(OM)ₐX'_{b}

mit M= Methyl oder Ethyl, X=C1-C18- Alkyl, -Alkylen, 3-(Meth)acryloyloxypropyl, (Meth)acryloyloxyalkylpropyl, oder 3-Glycidyloxypropyl 3-Mercaptopropyl, X'=H oder CH3, und a=1-3 und b=3-a. Bevorzugt sind die Verbindungen Vinyltrimethoxysilan, Vinyltriethoxysilan, 3-(Meth)acryloyloxypropyltrimethoxysilan, 3-(Meth)acryloyloxypropyltriethoxysilan, 3-Mercaptopropyltrimethoxysilan und 3-Mercaptopropyltriethoxysilan.

Der Gehalt an Organosilizium-Verbindung beträgt bevorzugt 0-2 Gewichts-%, insbesonders 0-1 Gewichts-%, bezogen auf die gesamte Formulierung.

Eine bevorzugte Ausführungsform des Oberflächenbehandlungsmittels kann ausserdem dem Fachmann bekannte Hilfsstoffe wie Additive und Stellmittel enthalten.

Weiterhin bezieht sich die Erfindung auf einen Artikel, dessen Oberfläche zumindest im Verbundbereich aus Metall besteht und der mit einem vorstehend beschriebenen Oberflächenbehandlungsmittel vorbehandelt wurde. Der Artikel kann vollständig aus Metall sein, oder alternativ mit Metall beschichtet, verklebt oder auf andere Weise verbunden sein. Metalle umfassen dabei einerseits reine Metalle oder Stähle und andererseits aber auch Legierungen wie beispielsweise von Aluminium, Eisen, Nickel, Kupfer, Zinn, Zink, Wolfram, Vanadium oder Chrom. Insbesondere von Interesse und bevorzugt sind unterschiedliche Aluminium- und Stahlarten, wie sie für den Werkzeugund Fahrzeugbau üblich sind. Einige nicht limitierende Beispiele umfassen AlMg3, AlMg1, anodisiertes Aluminium, Stahl 1.4103, chromatierten, galvanisierten, feuerverzinkten oder elektroverzinkten Stahl.

Das Oberflächenbehandlungsmittel wird auf den Artikel aufgetragen. Der Auftrag kann durch Aufsprühen, Eintauchen, Abwischen mit getränkten Trägermaterialien wie Tüchern, Watten, Rollen, Pinsel, Schwämmen und dergleichen erfolgen. Der Auftrag des Oberflächenbehandlungsmittels soll zumindest in dem Bereich erfolgen, in welchem der Klebstoff oder der Dichtstoff anschliessend appliziert werden soll. Um einen möglichst guten Haftverbund zu erhalten, soll der Auftrag des Oberflächenbehandlungsmittels möglichst vollständig und gleichmässig auf der zu verbindenden Fläche erfolgen.

Zwischen dem Auftragen des Oberflächenbehandlungsmittels und der Applikation des Klebstoffs oder Dichtstoffes verstreicht eine gewisse Zeit, während der das Lösungsmittel verdunsten kann. Eine zu kurze Offenzeit ist zu vermeiden, da das überschüssige Lösungsmittel die mechanischen Eigenschaften des Klebstoffs oder des Dichtstoffes negativ beeinflusst. Typischerweise beträgt die Offenzeit für das erfindungsgemässe Oberflächenbehandlungsmittel zwischen 30 Sekunden und einigen Stunden. Beim erfindungsgemässen Oberflächenbehandlungsmittel wurde jedoch überraschend gefunden, dass Offenzeiten selbst von mehreren Tagen und Wochen möglich sind, ohne dass eine merkliche Beeinträchtigung der Hafteigenschaften erfolgt.

Nach dem Ablüften des Oberflächenbehandlungsmittels wird auf diesem ein aerober Klebstoff oder ein aerober Dichtstoff in einer dem Fachmann bekannten Art aufgetragen.

Als aerobe (Meth)acrylatsysteme werden 2-komponentige Systeme definiert, bei denen neben den mindestens in einer Komponente vorliegenden (Meth)acrylatmonomeren, beziehungsweise Mischungen derselben, in der einen Komponente mindestens ein Radikalstarter, typischerweise ein Peroxid, und in der anderen Komponente mindestens ein Beschleuniger enthalten ist. Im Gegensatz zu anaeroben Systemen überraschend hierbei dickschichtige Verklebungen, Beschichtungen und Dichtungen ermöglicht.

Solche aeroben Klebstoffe und Dichtstoffe sind zwei-komponentig. Die Acrylat- und/oder Methacrylat-Monomeren, beziehungsweise Mischungen derselben, können in beiden Komponenten vorkommen. Es ist aber auch durchaus möglich, dass sie nur in einer Komponente vorkommen. In der einen Komponente ist mindestens ein Beschleuniger und in der zweiten Komponente mindestens ein Radikalstarter, üblicherweise ein Peroxid, vorhanden. Beide Komponenten werden vor Gebrauch gemischt.

Ein Klebstoff wird auf das abgelüftete Oberflächenbehandlungsmittel aufgetragen und daraufhin mit mindestens einem zweiten Artikel verbunden. Falls die Oberfläche dieses Artikels ebenfalls aus Metall besteht, ist es von Vorteil, wenn diese Oberfläche zumindest im Verbundbereich vorher mit Oberflächenbehandlungsmittel vorbehandelt wurde. Falls die Oberfläche des weiteren Artikels nicht aus Metall besteht, kann auf eine derartige Vorbehandlung gegebenenfalls verzichtet werden. Alternativ kann dann allerdings auch eine andere Art von Oberflächenbehandlung hierfür nötig sein.

Im Rahmen einer Anwendung als Dichtstoff ist eine Öffnung in einem Artikel oder zwischen mehreren Artikeln derart zu schliessen, dass nach der Polymerisation des Dichtstoffs der Ein- oder Austritt von Flüssigkeiten oder Gasen durch den Artikel hindurch unterbunden ist. Falls die Oberfläche des weiteren Artikels ebenfalls aus Metall besteht, ist es von Vorteil, wenn sie zumindest im Verbundbereich ebenfalls mit Oberflächenbehandlungsmittel vorbehandelt wurde. Falls die Oberfläche des weiteren Artikel nicht aus Metall besteht, kann auf eine solche Vorbehandlung gegebenenfalls verzichtet werden, oder aber es kann eine andere Art von Oberflächenbehandlung hierfür nötig sein.

### Beispiele

### Zusammensetzung von beispielhaften Oberflächenbehandlungsmittel

Es wurden die folgenden Zusammensetzungen auf der Basis von Isopropanol und des Haftvermittlers Sartomer SR 9051 (kommerzielle Mischung einer 50%ige Lösung von Formel A, in einem (Meth)acrylat, erhältlich von Sartomer/Cray Valley) erstellt:

**Tabelle 1:**

| Zusammensetzungen von Oberflächenbehandlungsmittel | | | |
|---|---|---|---|
| Bezeichnung | Isopropanol | SR 9051 | Formel A |
| Ref. | 100% w/w | | |
| OB-0.5 | 99% w/w | 1% w/w | 0.5% w/w |
| OB-1 | 98% w/w | 2% w/w | 1% w/w |
| OB-1.5 | 97% w/w | 3% w/w | 1.5% w/w |
| OB-2 | 96% w/w | 4% w/w | 2% w/w |
| OB-2.5 | 95% w/w | 5% w/w | 2.5% w/w |
| OB-3 | 94% w/w | 6% w/w | 3% w/w |
| OB-3.5 | 93% w/w | 7% w/w | 3.5% w/w |
| OB-4 | 92% w/w | 8% w/w | 4% w/w |
| OB-4.5 | 91% w/w | 9% w/w | 4.5% w/w |
| OB-5 | 90% w/w | 10% w/w | 5% w/w |

### Untergründe:

Es wurden die folgenden Metalluntergründe von der Firma Rocholl, Deutschland, verwendet:
Aluminium : AlMg3, 100*25 mm, 2 mm dick
Feuerverzinkter Stahl: ST02 Z275/NACR, 100*25 mm,1.5 mm dick
Edelstahl: 1.4301, 100*25 mm, 1.5 mm dick

### Oberflächenbehandlungsmittel-Applikation

Die Metalluntergründe wurden mit einem getränkten Papiertuch (Kleennex®) abgewischt. Als Referenz wurde in gleicher Weise ein mit Isopropanol getränktes Papiertuch verwendet. Zwischen der Applikation des Oberflächenbehandlungsmittels und des Klebstoffs wurde mindestens 30 Sekunden gewartet.

### Klebstoff

Alle Messungen wurden mit dem Klebstoff SikaFast® 5211 (kommerziell erhältlich von Sika AG, Schweiz) verwendet. Es handelt sich hierbei um einen schnell aushärtenden flexiblen 2 komponentigen Klebstoff, dessen Komponente A im Wesentlichen aus (Meth)acrylatmonomeren und Komponente B aus einem Peroxid besteht. Der Klebstoff wurde mittels einer Kartuschenpistole und mit Statikmischer vorgemischt und appliziert.

### Prüfkörperherstellung:

Aus 2 Metallstücken wurden Zugscherfestigkeitsprüfkörper gemäss DIN EN 1465 erstellt. Die Überlappung betrug 12.5 mm, Schichtdicke des Klebstoffs 1.5 mm.

### Prüfung:

Die Zugscherfestigkeit wurde auf einer Zwick Apparatur mit einer Zuggeschwindigkeit von 10 mm/min nach DIN EN 1465 circa einen Tag nach Applikation des Klebstoffes gemessen. Bei den temperaturabhängigen Messungen wurde der Probekörper bei dieser Temperatur 60 min konditioniert und im geheizten Proberaum geprüft.

### Resultate

In Tabelle 2 sind die Resultate zusammengestellt, welche auf unterschiedlichen Metallen den Einfluss des Oberflächenbehandlungsmittels bei Raumtemperatur zeigen. Ausnahmslos sind die Zugscherfestigkeiten mit dem Oberflächenbehandlungsmittel bedeutend höher als ohne. Bei Aluminium und Edelstahl ist der positive Einfluss des Oberflächenbehandlungsmittels auf die Zugfestigkeiten sowie das Bruchbild eindeutig festzustellen.

**Tabelle 2:**

| Zugscherfestigkeiten auf unterschiedlichen Metallen [MPa] | | | |
|---|---|---|---|
| | Edelstahl | Feuerverzinkt | Aluminium |
| Ref. | 8 (80% adhäsiv) | 3 (100% adhäsiv) | 10 (50% adhäsiv) |
| OB-0.5 | 9 (80% adhäsiv) | 5 (100% adhäsiv) | 13 (100% kohäsiv) |
| OB-1 | 9 (80% adhäsiv) | 5 (100% adhäsiv) | 11 (100% kohäsiv) |
| OB-1.5 | | 5 (100% adhäsiv) | |
| OB-2 | 11 (100% kohäsiv) | 5 (100% adhäsiv) | |
| OB-2.5 | | 6 (100% adhäsiv) | |
| OB-3 | 10 (100% kohäsiv) | 7 (100% adhäsiv) | 11 (100% kohäsiv) |
| OB-3.5 | | 5 (100% adhäsiv) | |
| OB-4 | 10 (100% kohäsiv) | 5 (100% adhäsiv) | |
| OB-4.5 | | 4 (100% adhäsiv) | |
| OB-5 | 10 (100% kohäsiv) | 5 (100% adhäsiv) | 13 (100% kohäsiv) |

Aus Tabelle 3 ist klar ersichtlich, dass die Offenzeit von mehreren Wochen die Haftungseigenschaften nicht beeinträchtigt und die Zugesscherfestigkeiten unverändert bleiben.

**Tabelle 3:**

| Unterschiedliche Offenzeiten | | |
|---|---|---|
| | Aluminium (mit OB-3 beschichtet) | Feuerverzinkter Stahl (mit OB-3 beschichtet) |
| Offenzeit | Zugscherfestigkeit [MPa] | Zugscherfestigkeit [MPa] |
| 30 Sekunden | 11 | 7 |
| 1 Woche | 13 | 6 |
| 2 Wochen | 11 | 7 |
| 3 Wochen | 11 | 7 |
| 4 Wochen | 11 | 8 |

Tabelle 4 zeigt die vorteilhafte Wirkung des Oberflächenmittels in Bezug auf die Haftung bei unterschiedlichen Temperaturen auf. Bei feuerverzinktem Stahl und Edelstahl wurden Messungen bei Raumtemperatur sowie bei 80 °C und 100°C durchgeführt. Über den gesamten beobachteten Temperaturbereich hinweg zeigt sich, dass mit oberflächenbehandeltem Substrat die Zugscherfestigkeiten bedeutend höher sind als im Falle der Referenz. Ab einer Temperatur > 80 °C sind die Werte der Referenz nicht mehr messbar. Zudem ist ein vollkommen unterschiedliches Bruchbild feststellbar. Bei den Proben mit Oberflächenbehandlungsmittel tritt stets ein kohäsiver Bruch auf, während bei der Referenz ein adhäsiver Bruch erfolgt.

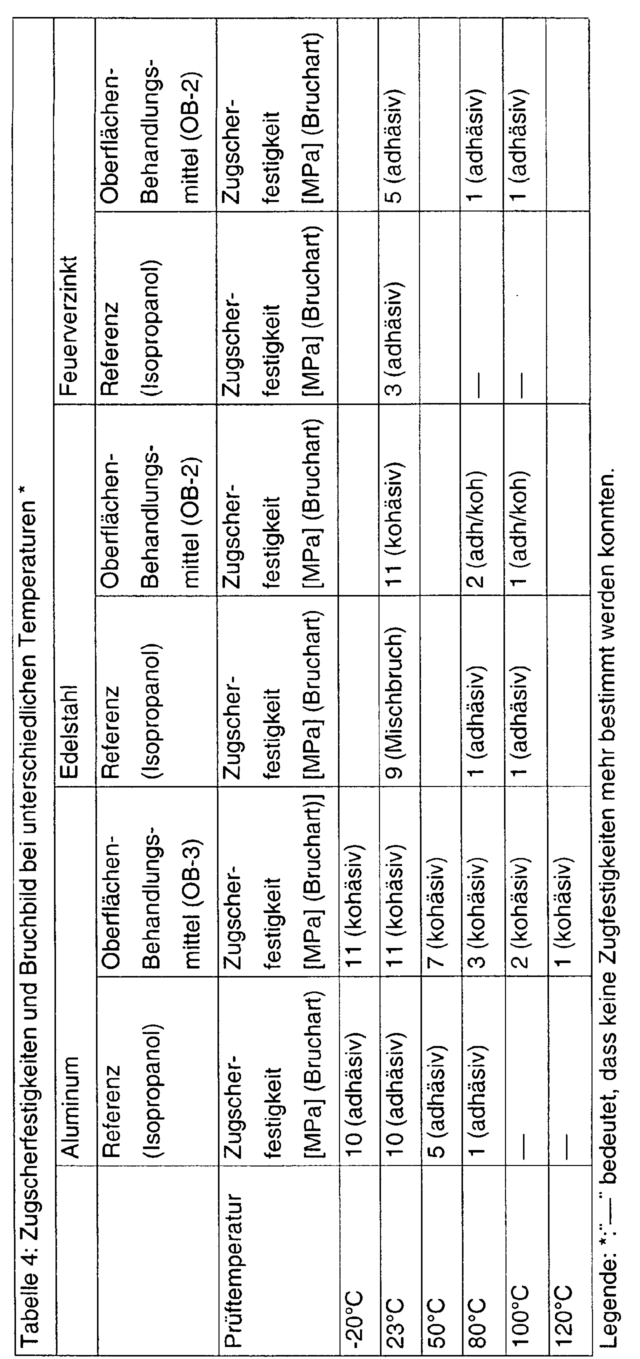

## Patentansprüche

1. Oberflächenbehandlungsmittel für aerobe (Meth)acrylatsysteme, umfassend ein oder mehrere Lösungsmittel sowie ein oder mehrere (Meth)acrylatmonomere der Formel A: 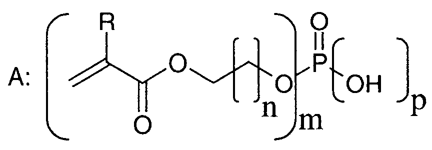 wobei R=H oder CH₃ und m=1-3, p=3-m und n=1-15 mit m, p und n =ganzzahlig ist.

2. Oberflächenbehandlungsmittel für aerobe (Meth)acrylatsysteme, bestehend aus:
- einem oder mehreren Lösungsmitteln;
- sowie einem oder mehreren (Meth)acrylatmonomeren der Formel A: 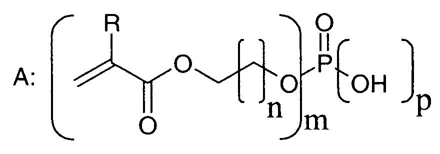 wobei R=H oder CH₃ und m=1-3, p=3-m und n=1-15 mit m, p und n =ganzzahlig ist;
- sowie einem oder mehreren weiteren (Meth)acrylatmonomeren, frei von phosphorhaltigen funktionellen Gruppen.

3. Oberflächenbehandlungsmittel für aerobe (Meth)acrylatsysteme, bestehend aus:
- einem oder mehreren Lösungsmitteln;
- sowie einem oder mehreren (Meth)acrylatmonomeren der Formel A: 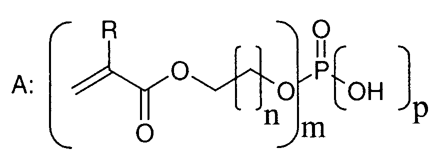 wobei R=H oder CH₃ und m=1-3, p=3-m und n=1-15 mit m, p und n =ganzzahlig ist;
- sowie mindestens Resorcin oder einem Derivat davon;
- sowie einem oder mehreren weiteren (Meth)acrylatmonomeren, frei von phosphorhaltigen funktionellen Gruppen.

4. Oberflächenbehandlungsmittel gemäss Anspruch 3, **dadurch gekennzeichnet, dass** der Gehalt an Resorcin oder dessen Derivate 1 - 10 Gewichts-%, bevorzugt 2 - 7 Gewichts-% beträgt, bezogen auf die gesamte Formulierung.

5. Oberflächenbehandlungsmittel gemäss einem der Ansprüche 2 bis 4, **dadurch gekennzeichnet, dass** die von phosphorhaltigen funktionellen Gruppen freien (Meth)acrylatmonomere, ausgewählt sind aus der Gruppe bestehend aus Trimethylolpropantriacrylat, ethoxylierten und propoxylierten (Meth)acrylaten, bevorzugt Trimethylolpropantriacrylat, ethoxyliertes Trimethylolpropantriacrylat, propoxyliertes Neopentylglycoldi(meth)acrylat und ethoxyliertes Ethyl(meth)acrylat, besonders bevorzugt 2-(2-Ethoxyethoxy)ethylacrylat.

6. Oberflächenbehandlungsmittel gemäss einem der Ansprüche 2 bis 5, **dadurch gekennzeichnet, dass** die weiteren, von phosphorhaltigen funktionellen Gruppen freien (Meth)acrylatmonomere, zu einem Anteil im Bereich von 0 - 20 Gewichts-%, bevorzugt 0 - 10 Gewichts-%, bezogen auf die gesamte Formulierung, vorhanden sind.

7. Oberflächenbehandlungsmittel gemäss einem der vorstehenden Ansprüche, **dadurch gekennzeichnet, dass** das Lösungsmittel einen Siedepunkt bei Normalbedingungen < 130°C, vorzugsweise <100°C, insbesondere <90°C aufweist.

8. Oberflächenbehandlungsmittel gemäss einem der vorstehenden Ansprüche, **dadurch gekennzeichnet, dass** das Lösungsmittel ein Keton oder ein Alkohol ist.

9. Oberflächenbehandlungsmittel gemäss einem der vorstehenden Ansprüche, **dadurch gekennzeichnet, dass** das Lösungsmittel Isopropanol ist.

10. Oberflächenbehandlungsmittel gemäss einem der vorstehenden Ansprüche, **dadurch gekennzeichnet, dass** in der Formel A n=1-3, bevorzugt n=1 ist.

11. Oberflächenbehandlungsmittel gemäss einem der vorstehenden Ansprüche, **dadurch gekennzeichnet, dass** in der Formel A R= CH₃ ist.

12. Oberflächenbehandlungsmittel gemäss einem der vorstehenden Ansprüche, **dadurch gekennzeichnet, dass** die Konzentration des (Meth)acrylatmonomeren der Formel A 1-10 Gewichts-%, bevorzugt 2-7 Gewichts-%, beträgt, bezogen auf die gesamte Formulierung.

13. Oberflächenbehandlungsmittel gemäss einem der vorstehenden Ansprüche, **dadurch gekennzeichnet, dass** die Zusammensetzung eine Organosilizium-Verbindung enthält.

14. Oberflächenbehandlungsmittel gemäss Anspruch 13 , **dadurch gekennzeichnet, dass** die Konzentration der Organosilizium-Verbindung 0-2 Gewichts-%, bevorzugt 0-1 Gewichts-% beträgt, bezogen auf die gesamte Formulierung

15. Artikel, dessen Oberfläche zumindest im Verbundbereich aus Metall besteht, **dadurch gekennzeichnet, dass** er mit einem Oberflächenbehandlungsmittel gemäss einem der vorstehenden Ansprüche vorbehandelt wurde.

16. Artikel gemäss Anspruch 15, **dadurch gekennzeichnet, dass** das Metall Aluminium, eine Aluminiumlegierung oder ein Stahl ist.

17. Artikel gemäss Anspruch 16, **dadurch gekennzeichnet, dass** die Aluminiumlegierung AlMg3 oder AlMg1 ist.

18. Artikel gemäss Anspruch 16 oder 17, **dadurch gekennzeichnet, dass** das Aluminium, beziehungsweise die Aluminiumlegierung anodisiert ist.

19. Artikel gemäss Anspruch 16, **dadurch gekennzeichnet, dass** der Stahl ein rostfreier Stahl ist, vorzugsweise chromatierter Stahl, feuerverzinkter oder galvanisierter Stahl.

20. Klebstoffsystem, **dadurch gekennzeichnet, dass** ein Artikel gemäss einem der Ansprüche 15 - 19 mittels eines aeroben (Meth)acrylatklebstoffes mit mindestens einem weiteren Artikel verklebt worden ist.

21. Dichtstoffsystem, **dadurch gekennzeichnet, dass** eine Öffnung in einem Artikel gemäss einem der Ansprüche 15 -19 oder zwischen zwei oder mehreren solchen Artikeln mittels eines aeroben (Meth)acrylatdichtstoffes gegen flüssige oder gasförmige Stoffen verschlossen worden ist.
